# EUROPÄISCHE PATENTSCHRIFT

(11) **EP 3 057 454 B1**
(45) Veröffentlichungstag und Bekanntmachung des Hinweises auf die Patenterteilung: **27.11.2019**
(21) Anmeldenummer: 14798697.0
(22) Anmeldetag: 16.10.2014
(51) Int. Cl.: A24F 47/00, H01M 6/40, H01M 2/10

(54) **ELEKTRISCHE ZIGARETTE MIT GEDRUCKTER BATTERIE**
ELECTRONIC CIGARETTE WITH PRINTED BATTERY
CIGARETTE ÉLECTRONIQUE AVEC BATTERIE IMPRIMÉE

(30) Priorität: 16.10.2013 DE 102013017149
(43) Veröffentlichungstag der Anmeldung: 24.08.2016
(73) Patentinhaber: ThePeople.de GmbH, 74223 Flein (DE)
(72) Erfinder: KIRNER, Markus, 71720 Oberstenfeld (DE)
(74) Vertreter: Raible Deissler Lehmann Patentanwälte PartG mbB
(86) Internationale Anmeldenummer: PCT/EP2014/002791
(87) Internationale Veröffentlichungsnummer: WO 2015/055314

(56) Entgegenhaltungen:
- WO-A1-2013/022936
- WO-A2-2004/106170
- WO-A2-2013/040193
- US-A1- 2003 219 648
- US-A1- 2006 016 453
- US-A1- 2013 255 702

## Beschreibung

Die vorliegende Erfindung betrifft eine Anordnung und ein Verfahren zum Einsatz von gedruckten Batterien bei elektrischen Zigaretten.

Elektrische Zigaretten, auch E-Zigarette, rauchlose Zigarette oder elektronische Zigarette genannt, sind Geräte zum Inhalieren verdampfter Flüssigkeit und sich daraus bildenden Nebels an Stelle von Zigarettenrauch. Die verdampfte Flüssigkeit und der daraus mit angesaugter Luft entstehende Nebel ähneln in Konsistenz und sensorischer Wirkung einem Tabakrauch.

Ein großer Anteil von kommerziell erhältlichen elektrischen Zigaretten sind Einwegzigaretten. Einwegzigaretten, auch Wegwerfzigaretten genannt, werden nach Gebrauch entsorgt. Elektrische Einwegzigaretten bestehen in der Regel aus einem Kunststoffröhrchen als Körper, der eine Batterie, einen Unterdrucksensor, eine Leuchtdiode, ein Flüssigkeitsdepot und ein Heizelement beinhaltet. Zur Versorgung des Heizelements mit elektrischer Energie werden traditionellerweise Einwegbatterien eingesetzt, sogenannte Primärzellen, die nur einmal gebraucht werden können. Sind sie leer, können sie nicht wieder aufgeladen werden.

Bisher werden elektrische Zigaretten vornehmlich in Handarbeit in China montiert. Dabei wird die Batterie in Form einer räumlich ausgedehnten, d. h. sehr dicken, galvanischen Zelle aufwendig mit einem Heizelement, einem Unterdrucksensor und einer Leuchtdiode verkabelt, um dann in das Kunststoffröhrchen eingeführt zu werden. Die Leuchtdiode ist insbesondere dazu geeignet, einen Betriebszustand der elektrischen Zigarette anzuzeigen.

Die Batterie in Form einer räumlich ausgedehnten galvanischen Zelle nimmt den größten Raum innerhalb des Kunststoffröhrchens ein und birgt eine gewisse Explosionsgefahr.

US 2003/219648 A1 beschreibt eine gedruckte Batterie mit einer flexiblen Unterlage und einer ersten Leiterbahnenschicht auf der Unterlage und einer Vielzahl Leiterbahnenschichten, die sich auf der ersten Leiterbahnenschicht stapeln.

US 2013/255702 A1 beschreibt ein leitendes Substrat zum Erwärmen eines elektrischen Rauchgeräts. Das leitende Substrat ist mit einer Batterie, die in eine Hüllstruktur eingebettet ist, in elektrische Verbindung zu bringen.

WO 2013/022936 A1 beschreibt ein elektrisches Rauchgerät mit einem röhrenförmigen ersten Gehäuse und einem Steuerungsgehäuse. Das Steuerungsgehäuse ist mit einem eingreifenden Ende wirksam mit dem Gehäuse verbunden und umfasst eine elektrische Energiequelle, die ein Wärmeelement mit Energie versorgt.

WO 2004/106170 A2 beschreibt eine Zigarettenschachtel mit einem elektrischen Feuerzeug und einer Batterie.

Es ist Aufgabe der vorliegenden Erfindung, eine elektrische Zigarette einfach, sicher und umweltfreundlich herzustellen.

Zur Lösung dieser Aufgabe werden eine elektrische Zigarette und ein Herstellungsverfahren mit den Merkmalen der jeweiligen unabhängigen Patentansprüche vorgestellt. Weitere Ausgestaltungen sind den abhängigen Patentansprüchen und der Beschreibung zu entnehmen.

Somit wird eine elektrische Zigarette mit einer gedruckten Batterie bereitgestellt, wobei von der elektrischen Zigarette umfasste elektrische Komponenten durch die gedruckte Batterie mit elektrischer Energie zu versorgen sind.

Um herkömmliche Batterien in den elektrischen Zigaretten zu ersetzen, bedarf es einer Energiequelle mit hoher Flexibilität in Bezug auf Dicke, geometrische Form, elektrische Spannung, elektrische Kapazität und Gewicht. Erfindungsgemäß ist eine gedruckte Batterie, auch Filmbatterie oder Folienbatterie genannt, vorgesehen. Die gedruckte Batterie kann auf jedes technisch geeignete Substrat bzw. Trägermaterial, wie bspw. Papier, Kunststoff oder Metall aufgebracht werden.

Gemäß einer möglichen Ausführungsform der elektrischen Zigarette basiert die gedruckte Batterie auf einem Zink-Mangandioxid System, das frei von Quecksilber ist. Allerdings kann auch jedes weitere geeignete Elektrolytsystem vorgesehen sein. Dünne gedruckte Batterien eignen sich besonders für flexible Produkte.

Bei der erfindungsgemäßen Anordnung bzw. elektrischen Zigarette ersetzt die gedruckte Batterie das Kunststoffröhrchen als Körper der elektrischen Zigarette und die bisher platzraubend innerhalb des Kunststoffröhrchens platzierte Batterie. Die gedruckte Batterie kann bspw. als Ummantelung jeweiliger Komponenten der elektrischen Zigarette ausgestaltet sein, wobei sie gleichzeitig Komponenten der jeweiligen elektrischen Zigarette, wie bspw. ein Heizelement und/oder einen Unterdrucksensor und/oder eine Leuchtdiode und/oder ein Flüssigkeitsdepot mit elektrischer Energie versorgt und dadurch einen Betrieb der elektrischen Zigarette ermöglicht.

Eine Anordnung der gedruckten Batterie an der elektrischen Zigarette ermöglicht einen Raumgewinn gegenüber einer traditionellen Bauweise, da auf zusätzlichen Bauraum zum Aufnehmen einer räumlich ausgedehnten Primärzelle verzichtet werden kann. Die gedruckte Batterie kann gleichzeitig das im Stand der Technik vorgesehene Kunststoffröhrchen und die gemäß dem Stand der Technik darin befindliche Batterie ersetzen. Entsprechend kann eine Verwendung von gedruckten Batterien zur Versorgung von elektrischen Zigaretten mit elektrischer Energie eine kompakte Ausgestaltung entsprechender elektrischer Zigaretten ermöglichen, die entsprechend materialsparend ist.

Insbesondere kann unter Verwendung gedruckter Batterien auf ein Kunststoffröhrchen zur Aufnahme der räumlich ausgedehnten galvanischen Zelle verzichtet werden. Da sich elektrische Zigaretten beim Betrieb aufgrund des Heizelements erwärmen, können aus dem Kunststoffröhrchen schädliche Gase austreten, die unter Verwendung der erfindungsgemäß vorgesehenen gedruckten Batterie vermieden werden können.

In einer möglichen Ausgestaltung der erfindungsgemäßen elektrischen Zigarette ist vorgesehen, dass die gedruckte Batterie eine Funktionseinheit, bestehend aus mindestens einer Komponente der folgenden Liste an Komponenten, zumindest teilweise ummantelt: Unterdrucksensor, Leuchtdiode, Flüssigkeitsdepot und Heizelement. Weiterhin ist denkbar, dass die elektrische Zigarette bzw. die Funktionseinheit eine Sensorik, wie bspw. einen Berührungssensor oder jede weitere technisch geeignete Benutzerschnittstelle zur Bedienung der elektrischen Zigarette umfasst.

Der Wegfall der Batterie innerhalb der elektrischen Zigarette ermöglicht eine kleinere Bauform bzw. eine Vergrößerung der Funktionseinheit, um eine Betriebsdauer zu verbessern und zu verlängern. Der Wegfall des Kunststoffröhrchens schont zudem die Umwelt und verbilligt die Herstellung.

Ferner betrifft die vorliegende Erfindung ein Herstellungsverfahren für eine elektrische Zigarette, bei dem eine gedruckte Batterie mit mindestens einer Komponente der elektrischen Zigarette verbunden und dadurch mit elektrischer Energie versorgt wird.

Das erfindungsgemäße Herstellungsverfahren sieht vor, dass eine Komponente, wie bspw. eine Funktionseinheit, bestehend aus bspw. einem Heizelement, d. h. einem Verdampfer, einem Unterdrucksensor und einem Flüssigkeitsdepot, einer jeweiligen elektrischen Zigarette zumindest teilweise, d. h. vollständig oder an einem Ende herausstehend, mit der dünnen und flexiblen gedruckten Batterie ummantelt wird. Die bisher aufwendige Verkabelung der Batterie mit dem Sensor, der Leuchtdiode und dem Heizelement kann entfallen, da die Funktionseinheit mit ihren elektrischen Polen bei der Ummantelung direkt an der gedruckten Batterie anliegen kann.

In einer möglichen Ausgestaltung des erfindungsgemäßen Herstellungsverfahrens ist vorgesehen, dass in die elektrische Zigarette als weitere Komponente der Funktionseinheit mindestens eine Leuchtdiode eingebracht wird, die einen Betriebszustand anzeigt. Dazu kann die Leuchtdiode bspw. mit einer Steuerungslogik verbunden sein, die ebenfalls in gedruckter Form in die elektrische Zigarette eingebracht wird.

Die Funktionseinheit kann auch ohne einen Unterdrucksensor durch einen an der Außenseite der gedruckten Batterie eingebetteten Auslöser aktiviert werden. Auch die Leuchtdiode der Funktionseinheit kann in die gedruckte Batterie eingebettet werden. Insbesondere ist vorgesehen, dass die gedruckte Batterie, die Leuchtdiode und/oder die Steuerungslogik als eine funktionale Einheit ausgestaltet sind.

Bei bisherigen elektrischen Einwegzigaretten wird das Kunststoffröhrchen zudem mit einer zusätzlichen bedruckten Ummantelung versehen. Dies entfällt bei der vorliegenden Erfindung durch die direkte Bedruckung der Außenfläche der gedruckten Batterie.

Ein weiterer Vorteil zu den bisher in elektrischen Einwegzigaretten eingesetzten kompakten Batterien ist der Wegfall einer Explosionsgefahr.

Bei der gedruckten Batterie werden die Funktionsschichten flächig aufgebracht, was eine Explosion ausschließt. Gerade bei einer elektrischen Zigarette, die an den Mund geführt wird, ist dies ein Sicherheitsgewinn.

Das erfindungsgemäße Herstellungsverfahren ermöglicht eine vereinfachte maschinelle Herstellung der elektrischen Zigarette, da insbesondere auf das Kunststoffröhrchen verzichtet werden kann.

Die vorliegende Erfindung erlaubt es, eine elektrische Zigarette einfacher, eventuell kostengünstiger, sicherer und umweltfreundlicher herzustellen als es unter Verwendung des Standes der Technik möglich ist.

In einer möglichen Ausgestaltung des erfindungsgemäßen Herstellungsverfahrens ist vorgesehen, dass Komponenten der elektrischen Zigarette in einem integrierten Herstellungsverfahren gemeinsam hergestellt werden.

Unter einer Komponente der elektrischen Zigarette ist im Kontext der vorliegenden Erfindung ein jeweiliges Einzelteil, wie bspw. die gedruckte Batterie, ein Mundstück, die Leuchtdiode oder der Verdampfer zu verstehen.

Da die vorliegende Erfindung insbesondere auf der Verwendung einer gedruckten Batterie als Quelle für elektrische Energie beruht, ist vorgesehen, einen Herstellungsprozess der erfindungsgemäßen elektrischen Zigarette dadurch effizient zu gestalten, dass verschiedene Komponenten der erfindungsgemäßen elektrischen Zigarette in einem integrierten Herstellungsverfahren, d. h. durch Fusionierung verschiedener Herstellungsschritte, gemeinsam hergestellt werden. Dafür kann bspw. ein geeignetes Druckverfahren eingesetzt werden, bei dem ein Mundstück in einem 3D-Druckverfahren gedruckt wird, auf das ein Verdampfer aufgebracht wird, auf den wiederum eine gedruckte Batterie derart aufgebracht wird, dass jeweilige Polaritäten der gedruckten Batterie an jeweiligen Polen des Verdampfers anliegen, so dass aufwendige Verkabelungen und entsprechende separate Herstellungsschritte entfallen.

Insbesondere ist vorgesehen, dass eine gedruckte Batterie auf einen an einem 3D-gedruckten Mundstück angeordneten Verdampfer aufgedruckt wird, so dass sich automatisch eine Zigarettenform ergibt. Dabei sind alle Komponenten einer herzustellenden elektrischen Zigarette exakten Positionen auf bspw. einem zu bedruckenden Substrat zugeordnet, um einen Druckprozess der gedruckten Batterie zu ermöglichen, der sowohl die Komponenten mit elektrischer Energie versorgt als auch die Komponenten funktional und strukturell verbindet. Dies bedeutet, dass durch das Drucken der gedruckten Batterie auf bzw. um eine jeweilige Komponente der elektrischen Zigarette eine funktionsfähige elektrische Zigarette erzeugt werden kann.

Insbesondere ist vorgesehen, dass die gedruckte Batterie in der Art eines Zigarettenpapiers um ein Mundstück bzw. eine Funktionseinheit herum gedruckt bzw. gedruckt und anschließend gewickelt wird.

Ferner betrifft die vorliegende Erfindung ein Herstellungsverfahren, bei dem jeweilige Komponenten der elektrischen Zigarette in einem modularisierten Herstellungsverfahren modular und getrennt voneinander hergestellt und im Anschluss daran zusammengefügt werden.

Um aufwendige Produktvarianten, wie bspw. Sonderwünsche, effizient herzustellen, ist vorgesehen, dass jeweilige Komponenten der erfindungsgemäßen elektrischen Zigarette als Module vorgefertigt und anschließend zusammengefügt werden. Durch eine modulare Herstellung, d. h. Fertigung, kann eine Vielzahl von Ausgestaltungen der erfindungsgemäßen elektrischen Zigarette, bspw. mit oder ohne Leuchtdiode, effizient produziert werden, ohne dass spezielle Maschinen bzw. Fachkräfte für lediglich eine spezielle Ausgestaltung abgestellt werden müssen.

Weitere Vorteile und Ausgestaltungen der Erfindung ergeben sich aus der Beschreibung und den beiliegenden Zeichnungen.

Die Erfindung ist anhand von Ausführungsformen in den Zeichnungen schematisch dargestellt und wird im Folgenden unter Bezugnahme auf die Zeichnungen ausführlich beschrieben.

### Kurze Beschreibung der Zeichnungen:

Figur 1 zeigt, gemäß einer Ausführungsform der erfindungsgemäßen elektrischen Zigarette, eine gedruckte Batterie mit einer Funktionseinheit mittig platziert.
Figur 2 zeigt, gemäß einer weiteren Ausführungsform der erfindungsgemäßen elektrischen Zigarette, eine gedruckte Batterie, welche eine Funktionseinheit vollständig ummantelt.
Figur 3 zeigt, gemäß einer noch weiteren Ausführungsform der erfindungsgemäßen elektrischen Zigarette, eine gedruckte Batterie mit einer Funktionseinheit an einem Ende herausstehend platziert.
Figur 4 zeigt, gemäß einer noch weiteren Ausführungsform der erfindungsgemäßen elektrischen Zigarette, eine gedruckte Batterie mit einer Funktionseinheit an einem Ende herausstehend ummantelt.

### Detaillierte Beschreibung der Zeichnungen

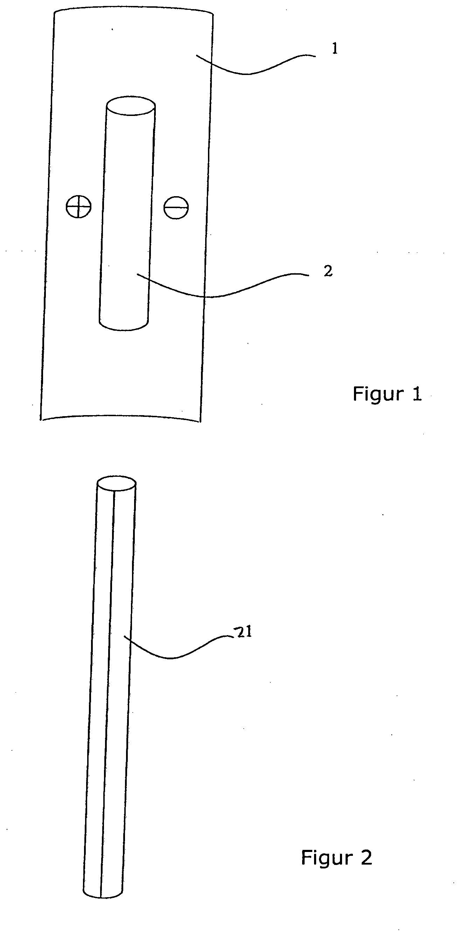

Eine in Figur 1 dargestellte elektrische Zigarette 2, die aus einem Heizelement, einem Flüssigkeitsdepot und einem Unterdrucksensor besteht, wird erfindungsgemäß während eines Herstellungsprozesses mit einer gedruckten Batterie 1 ummantelt.

Die gedruckte Batterie 1 besteht aus mindestens zwei Teilen, von denen ein Teil positiv und ein Teil negativ geladen ist. Durch ein zwischen den Teilen bzw. Polen entstehendes elektrisches Potential kann eine zum Betrieb der elektrischen Zigarette, d. h. zum Betreiben des Heizelements und weiterer Komponenten, wie bspw. einer Leuchtdiode nötige Energie bzw. elektrische Spannung bereitgestellt und die elektrische Zigarette dadurch betrieben werden. Die gedruckte Batterie 1 wird über alle Figuren übergreifend mit den gleichen Bezugszeichen bezeichnet.

Eine in Figur 2 dargestellte elektrische Zigarette 21 ist durch die gedruckte Batterie 1 ummantelt und betriebsbereit. Die gedruckte Batterie wurde derart in die elektrische Zigarette 21 eingebracht, dass jeweilige Pole, d. h. elektrisch leitende Bereiche, mit elektrischen Anschlüssen elektrischer Komponenten, wie bspw. einem Heizelement, in elektrischem Kontakt stehen, wodurch die elektrischen Komponenten entsprechend durch die gedruckte Batterie auch ohne eine aufwendige Verkabelung mit elektrischer Energie versorgt werden.

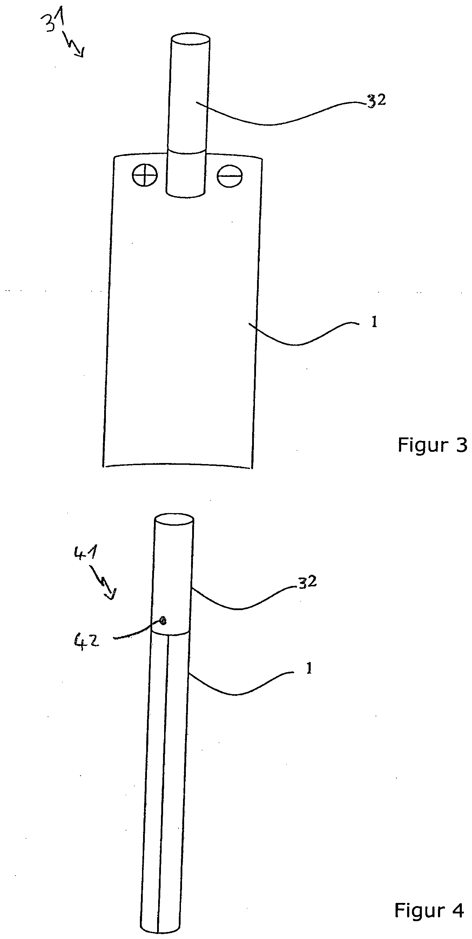

In Figur 3 ist eine Ausgestaltung der elektrischen Zigarette 31 dargestellt, bei der eine Funktionseinheit 32 bestehend aus dem Heizelement und einem Flüssigkeitsdepot außerhalb der gedruckten Batterie 1 angeordnet ist. Dies bedeutet, dass die gedruckte Batterie 1 nur den Teil der elektrischen Zigarette 31 ummantelt, der nicht zu der Funktionseinheit 32 gehört, wie bspw. ein Halteelement. Dazu kann die gedruckte Batterie 1 direkt auf das Haltelement aufgedruckt oder um das Halteelement herum gefaltet werden.

Durch eine räumliche Trennung von Funktionseinheit 32 bzw. Heizelement und gedruckter Batterie 1 kann ein Wärmeübergang von der Funktionseinheit 32 auf die gedruckte Batterie 1 minimiert werden, so dass die gedruckte Batterie 1 sich wenig erhitzt und entsprechend effizient und sicher betrieben werden kann.

Figur 4 zeigt eine betriebsbereite elektrische Zigarette 41 mit einer Funktionseinheit 32 und einer gedruckten Batterie 1, die zu einem Zylinder gefaltet wurde. An der Funktionseinheit 32 ist hier eine Leuchtdiode 42 angeordnet, die, soweit vorgesehen, einen Betriebszustand der elektrischen Zigarette 41 anzeigt, d. h. bspw. bei aktivem Heizelement bspw. eine grüne Farbe annimmt und bei einem Stand-by Modus, bei dem das Heizelement zwar mit elektrischer Energie versorgt wird, jedoch nicht heizt, bspw. eine orangene Farbe annimmt.

Beim Gebrauch der elektrischen Zigarette 41 wird die elektrische Zigarette 41 bspw. über einen Schalter aktiviert, so dass jeweilige elektrische Komponenten der elektrischen Zigarette 41 durch die gedruckte Batterie 1 mit elektrischer Energie versorgt werden. Anschließend kann die elektrische Zigarette 41 von einem jeweiligen Nutzer zu seinem Mund geführt werden, um an der elektrischen Zigarette 41 zu ziehen. Ein resultierender Unterdruck wird durch einen Unterdrucksensor registriert, so dass der Unterdrucksensor eine Aktivierung des Heizelements bewirkt, das durch ein Flüssigkeitsdepot bereitgestellte Flüssigkeit bzw. Gel oder jede weitere geeignete Substanz erhitzt und die Flüssigkeit verdampft. Die verdampfte Flüssigkeit bzw. Substanz strömt, bedingt durch den von einem Nutzer ausgeübten Unterdruck, in den Mund des Nutzers und kann von dem Nutzer inhaliert werden.

Sobald der Unterdruck durch den Nutzer unterbrochen wird, registriert der Unterdrucksensor eine Veränderung auf Normaldruck und bewirkt eine Deaktivierung des Heizelements.

## Patentansprüche

1. Elektrische Zigarette mit einer gedruckten Batterie (1), wobei von der elektrischen Zigarette umfasste elektrische Komponenten durch die gedruckte Batterie (1) mit elektrischer Energie zu versorgen sind, wobei die gedruckte Batterie (1) eine Funktionseinheit (32) der elektrischen Zigarette ummantelt, wobei die Funktionseinheit aus mindestens einer Komponente der folgenden Liste an Komponenten besteht: Unterdrucksensor, Flüssigkeitsdepot und Heizelement, und wobei die Funktionseinheit mit ihren elektrischen Polen direkt an der gedruckten Batterie anliegt.

2. Elektrische Zigarette nach Anspruch 1, wobei die elektrische Zigarette eine Leuchtdiode (42) umfasst.

3. Elektrische Zigarette nach Anspruch 1, wobei die Funktionseinheit (32) an einem Ende herausstehend mit der gedruckten Batterie (1) ummantelt ist.

4. Elektrische Zigarette nach einem der voranstehenden Ansprüche, wobei die Funktionseinheit (32) ohne einen Unterdrucksensor durch einen an der Außenseite der gedruckten Batterie (1) eingebetteten Auslöser zu aktivieren ist.

5. Herstellungsverfahren für eine elektrische Zigarette, bei dem eine gedruckte Batterie der elektrischen Zigarette mit mindestens einer Komponente der elektrischen Zigarette verbunden und die mindestens eine Komponente dadurch mit elektrischer Energie versorgt wird, wobei eine Funktionseinheit der elektrischen Zigarette von der gedruckten Batterie derart ummantelt wird, dass die Funktionseinheit mit ihren elektrischen Polen direkt an der gedruckten Batterie anliegt, und wobei die Funktionseinheit aus einer Komponente der folgenden Liste an Komponenten gewählt wird: Heizelement, Flüssigkeitsdepot und Unterdrucksensor.

6. Herstellungsverfahren nach Anspruch 5, bei dem als weitere Komponente für die elektrische Zigarette mindestens eine Leuchtdiode und/oder ein Mundstück vorgesehen wird.

7. Herstellungsverfahren nach einem der Ansprüche 5 bis 6, bei dem Komponenten der elektrischen Zigarette in einem integrierten Herstellungsverfahren gemeinsam hergestellt werden.

8. Herstellungsverfahren nach einem der Ansprüche 5 bis 6, bei dem jeweilige Komponenten der elektrischen Zigarette in einem modularisierten Herstellungsverfahren modular und getrennt voneinander hergestellt und im Anschluss daran zusammengefügt werden.

## Claims

1. An electronic cigarette having a printed battery (1), wherein electronic components comprised by the electronic cigarette are to be supplied with electrical energy by the printed battery (1), with the printed battery (1) enveloping a functional unit (32) of the electronic cigarette, wherein the functional unit consists of at least one component from the following list of components: vacuum sensor, liquid reservoir, and heating element, and wherein the functional unit with its electrical terminals directly contacts the printed battery.

2. The electronic cigarette according to claim 1, wherein the electronic cigarette comprises a light-emitting diode (42).

3. The electronic cigarette according to claim 1, wherein the functional unit (32), protruding at one end, is enveloped by the printed battery (1).

4. The electronic cigarette according to one of the preceding claims, wherein the functional unit (32) can be activated without a vacuum sensor by a trigger embedded on the outside of the printed battery (1).

5. A manufacturing method for an electronic cigarette, wherein a printed battery of the electronic cigarette is connected to at least one component of the electronic cigarette and the at least one component is thus supplied with energy, wherein a functional unit of the electronic cigarette is enveloped by the printed battery such that the functional unit with its terminals directly contacts the printed battery, and wherein the functional unit is selected as a component from the following list of components: heating element, liquid reservoir, and vacuum sensor.

6. The manufacturing method according to claim 5, wherein as an additional component of the electronic cigarette at least one light-emitting diode and/or a mouthpiece is provided.

7. The manufacturing method according to any of claims 5 to 6, wherein components of the electronic cigarette are manufactured together by an integrated manufacturing method.

8. The manufacturing method according to any of claims 5 to 6, wherein respective components of the electronic cigarette are manufactured by a modularized manufacturing method in a modular manner and separately from each other, and thereafter assembled.

## Revendications

1. Cigarette électronique dotée d'une batterie pressée (1), des composants électriques contenus dans la cigarette électronique devant être alimentés en énergie électrique par la batterie pressée (1), la batterie pressée (1) enveloppant une unité fonctionnelle (32) de la cigarette électronique, l'unité fonctionnelle étant constituée d'au moins un composant de la liste suivante de composants : capteur de dépression, magasin de liquide et élément chauffant, et l'unité fonctionnelle s'appliquant directement contre la batterie pressée par ses pôles électriques.

2. Cigarette électronique selon la revendication 1, la cigarette électronique comprenant une diode électroluminescente (42).

3. Cigarette électronique selon la revendication 1, l'unité fonctionnelle (32) étant enveloppée par la batterie pressée (1) en dépassant à une extrémité.

4. Cigarette électronique selon l'une quelconque des revendications précédentes, l'unité fonctionnelle (32) devant, en l'absence de capteur de dépression, être activée par un déclencheur encastré sur le côté extérieur de la batterie pressée (1).

5. Procédé de fabrication pour une cigarette électronique, selon lequel une batterie pressée de la cigarette électronique est reliée à au moins un composant de la cigarette électronique et l'au moins un composant est ainsi alimenté en énergie électrique, une unité fonctionnelle de la cigarette électronique étant enveloppée par la batterie pressée de telle sorte que l'unité fonctionnelle s'applique directement contre la batterie pressée par ses pôles électriques, et l'unité fonctionnelle étant un composant sélectionné dans la liste suivante de composants : élément chauffant, magasin de liquide et capteur de dépression.

6. Procédé de fabrication selon la revendication 5, selon lequel au moins une diode électroluminescente et/ou un embout buccal est prévu comme composant supplémentaire pour la cigarette électronique.

7. Procédé de fabrication selon l'une quelconque des revendications 5 à 6, selon lequel les composants de la cigarette électronique sont fabriqués conjointement par un procédé de fabrication intégrée.

8. Procédé de fabrication selon l'une des revendications 5 à 6, selon lequel les composants respectifs de la cigarette électronique sont fabriqués de façon modulaire et séparément les uns des autres par un procédé de fabrication modulaire, puis sont assemblés.
